# EUROPEAN PATENT SPECIFICATION

(11) **EP 3 765 388 B1**
(45) Date of publication and mention of the grant of the patent: **03.07.2024**
(21) Application number: 19719932.6
(22) Date of filing: 27.02.2019
(51) Int. Cl.: B65G 17/08

(54) **CONVEYOR CHAIN LINK**
KETTENGLIED FÜR FÖRDERSYSTEM
MAILLON DE CHAÎNE DE TRANSPORTEUR

(30) Priority: 16.03.2018 NL 2020608
(43) Date of publication of application: 20.01.2021
(73) Proprietor: Jonge Poerink Conveyors B.V., 7622 AV Borne (NL)
(72) Inventor: HOFF, Egbert Gerrit, 7642 LM Wierden (NL)
(74) Representative: Patentwerk B.V.
(86) International application number: PCT/NL2019/050125
(87) International publication number: WO 2019/177454

(56) References cited:
- US-A- 3 939 964
- US-A- 4 036 352
- US-A- 5 156 262
- US-A- 5 217 110
- US-A- 5 826 705
- US-A1- 2009 194 388
- US-A1- 2015 336 744

## Description

The invention relates to a conveyor chain.

More specifically, the invention relates to a conveyor chain link, a conveyor chain comprising these links and a transport conveyor.

In the art, conveyors are frequently used for transportation of bottles, cans, various kinds of good, such as edible products, potable products and or other goods.

Here a series of links are connected with hinging pins to form an endless conveyor chain loop. The conveyor chain is generally moving over a surface or over a set of guiders. Here, friction of the material of the links occurs while sliding over the surface or the guiders. The disadvantage of this sliding is the relative strong wear of either or both the links and/or the support elements such as guiders, the links are sliding over.

The American patent document US-A-3939964 discloses a chain conveyor with individual chain links, wherein the links are provided with a support structure, which support structure appears to be substantially extending on a first side, e.g. a transport surface side relative to the hinging pin engaging elements. In this document, the support structure does not extend beyond the hinging pin engaging elements on a second side. However the links slide with the hinging pin engaging elements over the set of guiders, which is disadvantageous for friction and wear concerns, as is explained herein above.

Document US-A-5826705 discloses a conveyor chain comprising at least two links, according to the preamble of claim 1.

Accordingly, it is an object of the invention to mitigate or solve the above described and/or other problems of conveyors chains in the art, while maintaining and/or improving the advantages thereof.

More specifically the object of the invention can be seen in providing a conveyor chain link that is more practical in use, easy in design and manufacture and is able to provide for less complex conveyor design.

These and/or other objects are reached by a conveyor chain comprising at least two links, according to the appended claim 1 and a transport conveyor comprising such a conveyor chain according to the appended claim 5.

By this arrangement of the support structure, wherein it does not extend on the bearing side of the links, the hinging pins, when inserted and keeping together two consecutive links, are at portions openly facing downward. Here, at the openly downward facing portions, at sections in between the hinging pin engaging elements, the pins can move on and be guided, supported and/or borne by guiders, or guiding surfaces.

Thus, the links need no longer slide over any support element. The hinging pins are generally made of metal, and have reduced wear while sliding over guiders, generally made of polymers. Similarly at returns, instead of rollers or drive gears, the returns can also be provided with guiders, on or over which the pins can slide. This can simplify the construction and manufacture of the conveyor in question. Thus, the tracks of the transport conveyor can be guided smoothly, substantially supported and borne by the hinging pins. This is advantageous, in that the hinging pins have a relative low friction contact surface with the guiders or guiding surfaces, mainly due to their relative small diameter. Thus, the total friction can be relative low, such that less friction losses may occur and less drive power may be needed. Furthermore, wear of the links and the support structure and the guiding surfaces or guiders may be reduced.

The hinging pin engaging elements comprise a series of ring structures, arranged slanted relative to the transport surface, wherein the ring structures comprise two series of aligned, slanted rings, each configured to engage a hinging pin. By arranging the rings slanted, the manufacturing of the individual links may be less complex. Typically, these links are manufactured by means of injection molding. Rings with openings substantially perpendicular to the the opening direction of the mold, by nature comprise undercut sections and require slides or pin inserts in the mold in order to be able to mold the links. By sufficiently slanting the ring containing elements, the rings may be formed, while no undercut is present. Thus, no pin inserts or slides may be necessary, which could greatly simplify the molds needed.

Consecutive links in the chain can have hinging pin stoppers on alternating lateral sides of the chain, such that a hinging pin is facing at its first abutting side a first stopper from a first link and at its second abutting side a second stopper from a second link.

Thus, by connecting the consecutive links with the pins, the links snap into connection, where the hinging pins cannot slide out. The snap fit renders the manufacture of the chains easier, since no tools or additional parts are needed to produce the chains.

The conveyor links of the conveyor chain are guided by a set of guiders, configured to allow the hinging pins of the conveyor chain to slide along. Thus, the tracks are borne on the hinging pins, possibly reducing wear and friction as indicated herein above.

The link can comprises at least one hinging pin stopper, such that the hinging pin cannot escape.

The link can comprises two hinging pin stoppers. The advantage is that the hinging pin can locked up between stoppers.

Consecutive links are connected by means of hinging pins. As indicated herein above and according to the invention, the hinging pins of the consecutive links are configured to bear the chain.

The links optionally comprise stoppers on alternating lateral sides of the chain, such that hinging pins are facing at their first abutting side a first stopper from a first link and at their second abutting side a second stopper from a second link.

By this arrangement, the links can be locked up. The conveyor chain can be guided by a set of guiders, configured to allow the hinging pins of the conveyor chain to slide along, or the conveyor chain can be substantially entirely borne by the hinging pins, moving over the guiders.

In order to further elucidate the invention, exemplary embodiments will be described with reference to the figures. In the figures:
Figure 1 depicts a schematic perspective view of a set of two links according to an embodiment of the invention;
Figure 2 depicts a schematic topside view of a set of two links according to the embodiment of the invention represented in figure 1;
Figure 3 depicts a schematic front side view of a set of two links according to the embodiment of the invention represented in figure 1.

The figures represent specific exemplary embodiments of the inventions and should not be considered limiting the invention in any way or form. Throughout the description and the figures the same or corresponding reference numerals are used for the same or corresponding elements.

The term ring-shaped is to be considered as, yet not to be seen as limited to an open through-going space surrounded by material, irrespective of the shape. Thus the material may be in the shape of a ring around the through going space, in the shape of an oval, a square, a long hole and/or any specific form suited for the purpose.

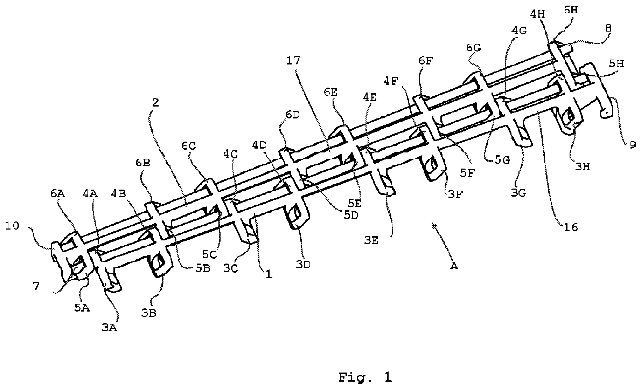

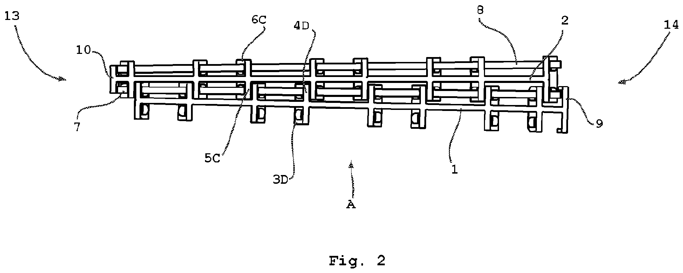

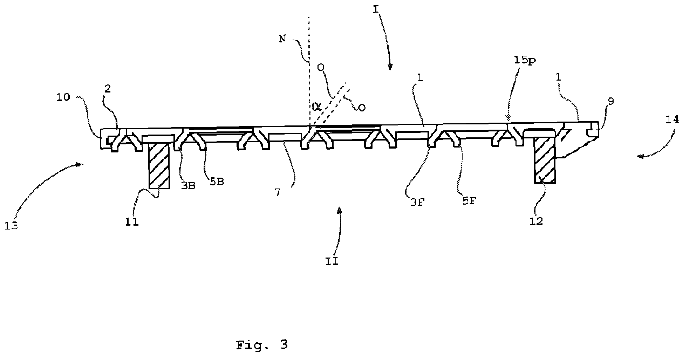

In figures 1,2 and 3 a set of two links is depicted in various views. The view of figure 3 is a front side view, indicated by arrow A in figures 1 and 2. In these figures a set of two 1 and 2 links is depicted. The link 1 comprises two sets 3A-H and 4A-H of hinging pin engaging elements, connected to support structure 16. Each set comprises a set of aligned rings, such that a hinging pin e.g. 7 or 8 can be inserted. The rings of the hinging pin engaging elements comprise surfaces that are slanted relative to the transport surface 15 as is indicated in figure 3. Here the line N is the axis perpendicular to the transport surface 15. O is an axis parallel to the slanted surface of the hinging pin engaging elements 3D. The angle α is chosen such, that the rings have no undercut portions seen in the direction of the line N.

The hinging pins 7 and 8 find a stopper 9 of link 1 at a first lateral side 14 of the chain, and a second stopper 10 of link 2 at a second lateral side 13 of the chain. Thus, a link can be snapped in its operating position, if two consecutive links 1 and 2 are provided and linked together. In order to do so, the stoppers 9 or 10 need to be elastically deformed, such to allow the pin 7 to be inserted in the set of hinging pin engaging elements 4A-4H and 5A-5H of links 1 and 2 respectively. Once the end of the pin 7 is passed the stoppers 9 or 10, the stopper in question is allowed to snap back to its original un-deformed state, therewith enclosing the pin 7 and avoiding the pin to escape.

In figure 3 a front side view of the set of two links 1 and 2 is depicted. The support structure 16 of link 1, to which the hinging pin engaging elements 3A-H and 4A-H are attached extends beyond the hinging pin engaging elements 3A-H and 4A-H at a first side I, i.e. the side to which support surface 15 is facing.

The support structure 16 does not extend beyond the hinging pin engaging elements 3A-H and 4A-H at a second side II. Thus, the support structure does not extend beyond the hinging pin 7. This allows the hinging pins 7 and 8 to rest on guiders 11 and 12 of the frame of the transport conveyor. Since the hinging pin engaging elements of the consecutive links are aligned in a transport direction A, all the links 1, 2 can be borne on the hinging pins 7 and 8. Thus a smooth transport of the entire belt can be arranged, while the hinging pins are sliding over guiders. The invention is to be understood not to be limited to the exemplary embodiments shown in the figures and described in the specification. For instance, the links in the various embodiments are depicted as alternating links 1 and 2. Alternatively, also a single-type-link belt for each track may be chosen, where the link engaging elements of the trailing side are sufficiently laterally offset from those hinging pin engaging elements of the leading side of the link, such that they fit in between each other and allow a hinging pin in. Here again at a first lateral side a first stopper and at a second lateral side a second stopper can be arranged such that the pins can only snap in when two links are connected by the pin.

In the description, the conveyor chain covers a width of one single link only, other more complex composed conveyor chains may be applied as well, such as various interlocking or staggered options, in order to have e.g. conveyor chains of larger widths.

These and other modifications are considered to be variations that are part of the scope of the invention outlined in the claims.

### List of reference signs

- 1.: Link
- 2.: Link
- 3.: Hinging pin engaging element
- 4.: Hinging pin engaging element
- 5.: Hinging pin engaging element
- 6.: Hinging pin engaging element
- 7.: Hinging pin
- 8.: Hinging pin
- 9.: Stopper
- 10.: Stopper
- 11.: Guider
- 12.: Guider
- 13.: Lateral side
- 14.: Lateral side
- 15.: Support surface
- 16.: Support structure
- 17.: Support structure
- I.: Support surface side
- II.: bearing side
- A.: Side
- N.: Line
- O.: Line
- α.: Angle

## Claims

1. A conveyor chain comprising at least two links (1, 2), wherein consecutive links (1, 2) are connected by means of hinging pins (7, 8),
wherein each link (1,2) comprises two sets of hinging pin engaging elements (3,4,5,6), one first set (3,5) being configured for engaging a leading side hinging pin (7) and one second set (4,6) being configured for engaging a trailing side hinging pin (8),
wherein the two sets of hinging pin engaging elements (3,4,5,6) are connected to a support structure (16,17), and wherein the support structure (16,17) extends on a first side (I), e.g. a transport surface side (I) relative to the hinging pin engaging elements (3,4,5,6) and the support structure (16,17) does not extend beyond the hinging pin engaging elements on a second side (II),
wherein the hinging pins (7,8) of the consecutive links (1,2) are configured to bear the chain,
wherein the hinging pin engaging elements (3,4,5,6) comprise a series of ring structures (3A-3H, 4A-4H,5A-5H, 6A-6H),
**characterized in that** the ring structures (3A-3H, 4A-4H,5A-5H, 6A-6H) are arranged slanted relative to the transport surface, wherein the ring structures comprise two series of aligned, slanted rings, each configured to engage a hinging pin (7 or 8).

2. The conveyor chain according to claim 1, wherein the link (1, 2) comprises at least one hinging pin stopper (9, 10).

3. The conveyor chain according to claim 2, wherein the link (1,2) comprises two hinging pin stoppers (9, 10).

4. The conveyor chain according to one of the preceding claims, wherein the links (1, 2) comprise stoppers (9 or 10) on alternating lateral sides (13 or 14) of the chain, such that hinging pins ( 9, 10) are facing at their first abutting side a first stopper (9) from a first link (1) and at their second abutting side a second stopper (10) from a second link (2).

5. A transport conveyor comprising a conveyor chain according to one of the preceding claims, wherein the conveyor chain is guided by a set of guiders (11, 12), configured to allow the hinging pins (7, 8) of the conveyor chain to slide along.

6. The transport conveyor according to claim 5, wherein the conveyor chain is substantially borne by the hinging pins (7, 8), moving over the guiders (11, 12).

## Patentansprüche

1. Förderkette, umfassend mindestens zwei Glieder (1, 2), wobei aufeinanderfolgende Glieder (1, 2) mittels Gelenkbolzen (7, 8) verbunden sind,
wobei jedes Glied (1, 2) zwei Sätze von Gelenkbolzen-Eingriffselementen (3, 4, 5, 6) umfasst, wobei ein erster Satz (3, 5) zum Eingriff mit einem vorderen Gelenkbolzen (7) ausgelegt ist und ein zweiter Satz (4, 6) zum Eingriff mit einem hinteren Gelenkbolzen (8) ausgelegt ist, wobei die zwei Sätze von Gelenkbolzen-Eingriffselementen (3, 4, 5, 6) mit einer Trägerstruktur (16, 17) verbunden sind, und wobei sich die Trägerstruktur (16, 17) auf einer ersten Seite (I), z. B. einer Transportflächenseite (I) relativ zu den Gelenkbolzen-Eingriffselementen (3, 4, 5, 6), erstreckt und die Trägerstruktur (16, 17) sich nicht über die Gelenkbolzen-Eingriffselemente auf einer zweiten Seite (II) erstreckt,
wobei die Gelenkbolzen (7, 8) der aufeinanderfolgenden Glieder (1, 2) dazu ausgelegt sind, die Kette zu tragen,
wobei die Gelenkbolzen-Eingriffselemente (3, 4, 5, 6) eine Reihe von Ringstrukturen umfassen (3A-3H, 4A-4H, 5A-5H, 6A-6H),
**dadurch gekennzeichnet, dass**
die Ringstrukturen (3A-3H, 4A-4H, 5A-5H, 6A-6H) relativ zur Transportfläche schräg angeordnet sind, wobei die Ringstrukturen zwei Reihen von ausgerichteten, schrägen Ringen umfassen, die jeweils dazu ausgelegt sind, mit einem Gelenkbolzen (7 oder 8) in Eingriff gebracht zu werden.

2. Förderkette nach Anspruch 1, wobei das Glied (1, 2) mindestens einen Gelenkbolzenanschlag (9, 10) umfasst.

3. Förderkette nach Anspruch 2, wobei das Glied (1, 2) mindestens zwei Gelenkbolzenanschläge (9, 10) umfasst.

4. Förderkette nach einem der vorhergehenden Ansprüche, wobei die Glieder (1, 2) an abwechselnden Seiten (13 oder 14) der Kette Anschläge (9 oder 10) umfassen, sodass Gelenkbolzen (9, 10) an ihrer ersten Anlageseite einem ersten Anschlag (9) von einem ersten Glied (1) und an ihrer zweiten Anlageseite einem zweiten Anschlag (10) von einem zweiten Glied (2) zugewandt sind.

5. Transportförderer, umfassend eine Förderkette nach einem der vorhergehenden Ansprüche, wobei die Förderkette durch einen Satz von Führungen (11, 12) geführt wird, die so ausgelegt sind, dass die Gelenkbolzen (7, 8) der Förderkette entlang gleiten können.

6. Transportförderer nach Anspruch 5, wobei die Förderkette im Wesentlichen durch die Gelenkbolzen (7, 8) getragen wird, die sich über die Führungen (11, 12) bewegen.

## Revendications

1. Chaîne de transporteur comprenant au moins deux maillons (1, 2), dans laquelle des maillons consécutifs (1, 2) sont reliés au moyen de broches d'articulation (7, 8),
dans laquelle chaque maillon (1, 2) comprend deux ensembles d'éléments de mise en prise de broche d'articulation (3, 4, 5, 6), un premier ensemble (3, 5) étant configuré pour venir en prise avec une broche d'articulation côté avant (7) et un second ensemble (4, 6) étant configuré pour venir en prise avec une broche d'articulation côté arrière (8),
dans laquelle les deux ensembles d'éléments de mise en prise de broche d'articulation (3, 4, 5, 6) sont reliés à une structure de support (16, 17), et dans laquelle la structure de support (16, 17) s'étend sur un premier côté (I), par exemple un côté de la surface de transport (I) par rapport aux éléments de mise en prise de broche d'articulation (3, 4, 5, 6), et la structure de support (16, 17) ne s'étend pas au-delà des éléments de mise en prise de broche d'articulation sur un second côté (II),
dans laquelle les broches d'articulation (7, 8) des maillons consécutifs (1, 2) sont configurées pour supporter la chaîne,
dans laquelle les éléments de mise en prise de broche d'articulation (3, 4, 5, 6) comprennent une série de structures annulaires (3A-3H, 4A-4H, 5A-5H, 6A-6H),
**caractérisée en ce que** les structures annulaires (3A-3H, 4A-4H, 5A-5H, 6A-6H) sont disposées de façon inclinée par rapport à la surface de transport, les structures annulaires comprenant deux séries d'anneaux alignés et inclinés, chacun étant configuré pour venir en prise avec une broche d'articulation (7 ou 8).

2. Chaîne de transporteur selon la revendication 1, dans laquelle le maillon (1, 2) comprend au moins une butée de broche d'articulation (9, 10).

3. Chaîne de transporteur selon la revendication 2, dans laquelle le maillon (1, 2) comprend deux butées de broche d'articulation (9, 10).

4. Chaîne de transporteur selon l'une des revendications précédentes, dans laquelle les maillons (1, 2) comportent des butées (9 ou 10) sur des côtés latéraux alternés (13 ou 14) de la chaîne, de sorte que les broches d'articulation (9, 10) font face, sur leur premier côté de butée, à une première butée (9) d'un premier maillon (1) et, sur leur second côté de butée, à une seconde butée (10) d'un second maillon (2).

5. Transporteur de transport comprenant une chaîne de transporteur selon l'une des revendications précédentes, dans lequel la chaîne de transporteur est guidée par un ensemble de guides (11, 12), configurés pour permettre aux broches d'articulation (7, 8) de la chaîne de transporteur de glisser le long de celle-ci.

6. Transporteur de transport selon la revendication 5, dans lequel la chaîne de transporteur est essentiellement supportée par les broches d'articulation (7, 8), se déplaçant sur les guides (11, 12).
